(19) **Europäisches Patentamt**
**European Patent Office**
**Office européen des brevets**

(11) **EP 3 822 882 B1**

(12) **EUROPEAN PATENT SPECIFICATION**

(45) Date of publication and mention
of the grant of the patent:
**11.03.2026 Bulletin 2026/11**

(21) Application number: **19209710.3**

(22) Date of filing: **18.11.2019**

(51) International Patent Classification (IPC):
*G06Q 10/0633* (2023.01)     *G06Q 10/067* (2023.01)
*G06N 3/08* (2023.01)     *G06N 3/044* (2023.01)
*G06N 3/0442* (2023.01)     *G06N 3/09* (2023.01)
*G06N 7/01* (2023.01)

(52) Cooperative Patent Classification (CPC):
**G06Q 10/0633; G06N 3/044; G06N 3/0442;
G06N 3/08; G06N 3/09; G06N 7/01; G06Q 10/067**

(54) **ESTIMATING CAUSAL EFFECTS IN A PHYSICAL SYSTEM**

SCHÄTZUNG VON KAUSALEN AUSWIRKUNGEN IN EINEM PHYSIKALISCHEN SYSTEM

ESTIMATION DES EFFETS CAUSAUX DANS UN SYSTÈME PHYSIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.05.2021 Bulletin 2021/20**

(73) Proprietor: **Robert Bosch GmbH
70442 Stuttgart (DE)**

(72) Inventor: **Rudolph, Maja Rita
72072 Tuebingen (DE)**

(56) References cited:
**EP-A1- 2 704 065     WO-A1-2018/142378**

- **SEBASTIAN GOMEZ-GONZALEZ ET AL: "Real
Time Trajectory Prediction Using Deep
Conditional Generative Models", ARXIV.ORG,
CORNELL UNIVERSITY LIBRARY, 201 OLIN
LIBRARY CORNELL UNIVERSITY ITHACA, NY
14853, 9 September 2019 (2019-09-09),
XP081475543**
- **AMINI ALEXANDER ET AL: "Variational
Autoencoder for End-to-End Control of
Autonomous Driving with Novelty Detection and
Training Debiasing", 2018 IEEE/RSJ
INTERNATIONAL CONFERENCE ON
INTELLIGENT ROBOTS AND SYSTEMS (IROS),
IEEE, 1 October 2018 (2018-10-01), pages 568 -
575, XP033491655, DOI: 10.1109/
IROS.2018.8594386**

# EP 3 822 882 B1

**Description**

## FIELD OF THE INVENTION

The invention relates to a computer-implemented method of estimating causal effects in a physical system, and to a corresponding system. The invention further relates to a computer-implemented method of predicting an output quantity of a physical system, and to a corresponding system. The invention further relates to a computer-readable medium.

## BACKGROUND OF THE INVENTION

Emissions of a vehicle are affected by behaviour of the driver throughout the trip, for example, the speed or acceleration that the driver applies when entering or exiting a particular roundabout. For example, consider a person who drives the same route to work every day. Sometimes, the person may be in a hurry and sometimes she may not. This can affect driving behaviour and thereby emissions, in a way that the driver can influence. There are also factors that the driver cannot control but that also affect the overall emissions, for example, the amount of traffic on the road. More generally, in a physical system, an output quantity may be affected by various other quantities. It may be possible to influence the values of some of these quantities, referred to as "treatment quantities", and thereby indirectly influence the output quantity. For example, if a driver would accelerate less or drive slower at a certain segment of the trip, e.g., when exiting a particular roundabout on the trip, this may result in reduced emissions. When a treatment quantity is changed in order to effect a change in an output quantity, this may be referred to as an "intervention" to the treatment quantity. Generally, the term "physical system" may relate to a particular delineated portion of physical reality being analysed. A physical system can comprise a device which interacts with a physical environment, such as a vehicle or a motor of the vehicle; the physical environment with which such a device interacts, for example, the surroundings of the vehicle; or both. It is not needed for the physical system to comprise such a device that interacts with an environment, however: for example, the physical system can also be a room or a building.

In various cases, the output quantity and/or the treatment quantities may be measurable, for example, directly by a sensor or indirectly by combining values of different sensors. Accordingly, these quantities may represent the state of the physical system at a particular point in time, for example, in terms of one or more physical quantities such as temperature, acceleration, pressure, etcetera. The quantities can also be measured over a time interval, for example, a total amount of a certain physical quantity such as a total amount of emissions of a vehicle; a total amount of use of a certain resource, for example, petrol or another energy source; a total amount of distance covered, etcetera.

Treatment quantities affecting an output quantity may be controlled or influenced in a relatively direct and predictable way, thereby also indirectly influencing the output quantity. For example, in the case of a computer-controlled device interacting with an environment, the treatment quantities can comprise an amount of pressure that is exerted, a rotation speed with which a wheel is rotated, etcetera. Such treatment quantities may be controlled by the computer, for example, through one or more actuators. For example, given a target value of such a treatment quantity, the actuators may be controlled to reach the target value in ways that are known per se in the art. The physical quantities may also be influenced by a user, for example, of a device that interacts with an environment. For example, a driver of a vehicle may control its speed and/or acceleration. Also here, given a target value of a treatment quantity, the user can typically control the device to reach the target value.

Various output quantities of a physical system may be harder to determine and/or control directly, however. For example, although a driver may be able to control the speed/acceleration of a vehicle at a point in time using the gas pedal, the driver may not be able to control or even determine the overall emissions that this results in; for example, the vehicle may not even be able to measure the emissions. Also, for a computer-controlled device, it may be hard to accurately predict or measure an effect to an output quantity of a physical system of an intervention to a treatment quantity. If available, based on such a prediction, a driver of a vehicle may be instructed, or a control system of an autonomous vehicle may be configured, to operate the vehicle in a way that reduces emissions.

In order to establish causal effects of treatments in practice, e.g., for physical systems, it is known to perform randomized experiments. In a randomized experiment, experimental units are allocated randomly across treatment groups to which different treatments are applied. Randomization can reduce bias by equalising confounding factors that have not been explicitly accounted for in the experimental design. SEBASTIAN GOMEZ-GONZALEZ ET AL: "Real Time Trajectory Prediction Using Deep Conditional Generative Models", ARXIV.ORG, CORNELL UNIVERSITY LIBRARY, 201 OLIN LIBRARY CORNELL UNIVERSITY ITHACA, NY 14853, 9 September 2019 (2019-09-09), XP081475543, propose a deep conditional generative model for trajectory prediction that is learned from a data set of collected trajectories. WO 2018/142378 A1 discloses methods, systems and apparatus, including computer programs encoded on a computer storage medium, for generating sequences of predicted observations, for example images.

AMINI ALEXANDER ET AL: "Variational Autoencoder for End-to-End Control of Autonomous Driving with Novelty Detection and Training Debiasing", 2018 IEEE/RSJ INTERNATIONAL CONFERENCE ON INTELLIGENT ROBOTS AND SYSTEMS (IROS), IEEE, 1 October 2018 (2018-10-01), pages 568-575, XP033491655, DOI: 10.1109/IROS.2018.8594386, propose and evaluate a novel architecture for self-supervised learning of latent variables to detect the insufficiently trained situations. EP 2 704 065 A1 discloses a method, computer program product, and computer system for updating a data structure reflecting a spatio-temporal phenomenon in a physical area, wherein the spatio-temporal phenomenon is estimated at any location of the physical area by a Gaussian Process with a mean function and a covariance function.

## SUMMARY OF THE INVENTION

In accordance with a first aspect of the invention, a computer-implemented method of estimating causal effects in a physical system is proposed, as defined by claim 1.

As the inventors realized, when estimating causal effects in physical systems, it is often needed to consider sequential treatments. Various embodiments relate to a physical system in which an output quantity may be affected over multiple points in time by at least one treatment quantity. Such treatments may be referred to as "sequential" in the sense that they affect the output quantity over a time period and can vary during that period. Because multiple points in time are involved, the determination of causal effects in such a setting may be seen as a multi-cause inference. There can also be multiple treatment quantities defined at the multiple points in time, for example, at least two or at least five. For example, a trip of a vehicle may comprise multiple segments, e.g., respective portions of the trip each representing a particular distance covered as part of the trip. For each segment of the trip, a treatment quantity may have a respective value, e.g., a respective velocity, acceleration, etc. Generally, the treatment quantities at respective points in time may represent the state of the physical system at those points in time, for example, a speed or an acceleration of a machine, e.g., a vehicle, operating in an environment. The treatment quantities may be measurable in the sense that their values can be obtained directly from a sensor or indirectly by combining sensor measurements.

The output quantity that is affected by the sequential treatment may be measured over a time interval, e.g., the output quantity may be a total amount of a certain physical quantity measured over the time interval. Examples include a total amount of emissions of a vehicle; a total amount of use of a certain resource, for example, petrol or another energy source; a total amount of distance covered, etcetera. It is noted that an output quantity is not necessarily a total or aggregated property: for example, it can represent the physical state at the end of a time period, e.g., a final location of a moving object, a temperature of a room being controlled after a certain period of time, etcetera. Although the output quantity may be measurable, in various embodiments measurements of the output quantity may be measured only in a controlled test environment but not in regular situations, e.g., during regular use of a device or machine. For example, emissions of a vehicle are typically measured in a controlled test environment, e.g., on a roller dyno, although in some cases they can also be measured in use, e.g., using a portable emissions measurement system (PEMS). Although, in the field of statistics, techniques are known to perform causal inference in the presence of multiple confounders, these techniques are not directly applicable to sequential treatments for physical systems. An example of such a known technique is disclosed in "The Blessings of Multiple Causes" by Y. Wang and M. Blei (available at https://arxiv.org/abs/1805.06826 and incorporated herein by reference). In this paper, causal inference is performed by defining and fitting a probabilistic factor model to entries of a dataset each comprising multiple causes and an outcome. The probabilistic factor model defines a latent variable for each element of the dataset. Causes are modelled to be conditionally dependent on this latent variable according to respective per-cause distributions. To perform inference, the latent variable for each dataset entry is determined and then used as a substitute confounder in a regression. A single latent variable is used to represent confounding factors applying to each of the multiple causes and the outcome.

By using latent feature vectors as deconfounders, interestingly, it may be avoided to assign experimental units to random treatment groups. When analysing physical systems, performing randomised treatments is often not possible, for example, because of costs, or ethical or safety reasons. For example, when analysing emission of a vehicle, it may be undesirable to have drivers perform a particular treatment, e.g., since doing so may have consequences for their safety, or may simply be impractical. Approaches based on latent feature vectors may allow to instead use observational data without the need for randomized treatments.

As the inventors realized, however, in order to estimate causal effects of sequential treatments, for example, to predict the output quantity or a change in the output quantity due to an intervention in the treatment quantity, temporal aspects of the physical system may be taken into account. For example, a treatment applied at a particular point in time may not only affect the output quantity at that point in time, but also affect the internal state of the physical system and thereby affect contributions to the output quantity at subsequent points in time. For example, accelerating may cause a vehicle engine to heat up, which may affect efficiency of the engine and thereby its emissions at later points in time.

As another example, measured relations between the treatment quantity and the output quantity may be influenced by sequential confounders, e.g., sequential variables affecting both the treatment quantity and the output quantity. As a result of such confounders, the so-called "intervention distribution" representing the causal effect of influencing a treatment quantity over multiple points in time in order to effect a change to an output quantity, typically differs from the conditional distribution of the output quantity given the values for the treatment quantity at the multiple points in time. For example, the traffic situation may affect both driving behaviour and overall emissions. As a consequence, when switching to driving behaviour that is correlated with low emissions, this may not necessarily result in lower emissions in a given traffic situation, since it could be the traffic situation that causes the emissions rather than the driving behaviour itself. As the inventors realized, these sequential confounders, for example, the traffic situation, may differ over time and accordingly influence relations between respective treatment quantities and the output quantity differently at different points in time. On the other hand, unobserved confounders may be temporally related to each other, e.g., the traffic situation at a certain point in time depends on what the traffic situation was previously.

Interestingly, in order to be able to take these and other temporal aspects into account when estimating causal effects, the inventors envisaged to make use of a temporal latent variable model. Such a temporal latent variable model may represent the state of the physical system at a particular point in time as a latent feature vector in a latent space. The temporal latent variable model may further provide transition probabilities between latent feature vectors at subsequent points in time, for example, as a table of transition probabilities or in the form of a function trained to compute these transition probabilities. The temporal latent variable model may also provide observation probabilities of observing at least the treatment quantity at a point in time given a latent feature vector, e.g., in the form of a determined table or trained function. As a temporal latent variable model, for example, a Hidden Markov Model (HMM) or Kalman filter may be used; examples are given throughout.

Accordingly, in various aspects, causal effects in the physical system may be captured in the form of a regression model that estimates the output quantity from measurements of the treatment quantity and from corresponding latent feature vectors according to the temporal latent variable model. As is known from statistics per se, when estimating causal effects on an outcome, if the confounders driving both the outcome and the causal effects can be observed, then it is possible to determine effects of the causes on the outcomes in terms of observations of the causes, confounders, and effects. With observational data, however, such confounders are usually not observable. By using a temporal latent feature value model, interestingly, latent feature vectors may be obtained for observation that may effectively provide an estimate of the dynamic confounders affecting sequential treatments. Accordingly, by determining a regression model that estimates the output quantity from the treatment quantity and the latent feature vectors, the effects of the sequential treatment and of confounding factors may effectively be separated, leading to a more accurate estimate of the causal effects of the sequential treatment than if the confounders were not considered.

As an example of a regression model, a linear regression model may be used; however, generally, any model for determining the output quantity from the treatment quantity and the latent feature vectors can be used. For example, various outcome models as known from the literature per se may be used. Specifically, the regression model can itself be a temporal model, for example, a recurrent neural network such as a Long Short-Term Memory (LSTM) network. Various examples are discussed throughout.

By providing transition probabilities and observation probabilities, the temporal latent variable model may effectively allow to capture dynamic aspects of the physical system. Because of the observation probabilities in the temporal latent variable model, the treatment quantities may be regarded in this model essentially as observations of the internal state of the physical system, with the latent feature vectors representing the state of the physical system. The use of the transition probabilities may allow to efficiently capture the latent dynamics, e.g., the temporal relations between internal states of the physicals system. Typically, the temporal latent variable model has been trained on observations of the latent feature variables; interestingly, this training typically does not require observations of the output quantity, which is particularly beneficial if the output quantity is more difficult to measure than the treatment quantity. In various aspects, the regression model may be fit to a set of multiple labelled observations in order to estimate causal effects of the treatment quantity on the output quantity. Such a labelled observation may comprise measurements of the treatment quantity at the multiple points in time and a measurement of the output quantity. For each labelled observation, latent feature vectors at the multiple points in time may be determined according to the temporal latent variable model as is known per se, and the regression model may be fit to the measurements and determined latent feature vectors. In such cases, the regression model may itself be regarded as an estimate of the causal effects of the treatment quantity at the multiple points in time, in the sense of enabling to predict the output quantity for an input observation. Because of the latent feature vectors, confounding factors may be taken into account in this estimate. Moreover, the latent feature vectors can more accurately take into account temporal aspects, e.g., through the use of the transition and observation probabilities. Accordingly, causal aspects may be accurately estimated without the need for randomized experiments.

In various aspects, an input observation comprising measurements of the treatment quantity at the multiple points in time may be obtained, and a fitted regression model may be used to determine a prediction of the output quantity for the input observation. To this end, the fitted regression model may be applied to the measurements of the treatment quantity and the latent feature vectors determined by the temporal latent variable model. Accordingly, the output quantity, e.g., emissions of a car, may be predicted without needing to be measured. The use of the temporal latent variable model in combination with the measurements of the treatment quantity may here result in a more accurate prediction. Generally, when a model is trained on training data and then used for predictions on test data, in order to get accurate results, the test data should be from the same distribution as the training data, e.g., the model should be generalizable to the test data. In practice, this is often not the case, in particular in the presence of unobserved confounders. By correcting for unobserved confounders using the temporal latent variable model, better predictions may be obtained especially when the distribution of the data differs between training and use, e.g., predictions may be obtained that generalize better. As will be understood, the term "prediction" here is intended as an estimation of the output quantity as opposed to a direct measurement; it does not necessarily imply that the predicted quantity is a future quantity.

In various embodiments, the physical system comprises a vehicle, such as a car, motor, or truck. It may be desirable to operate a vehicle in such a way that overall emissions are minimized, typically in combination with various other goals such as ensuring that the vehicle arrives at the desired destination quickly and safely. Accordingly, the output quantity may be indicative of emissions of the vehicle. The treatment quantity may be indicative of a driving behaviour. The driving behaviour, broken down into individual decisions over the duration of a trip, may all contribute to the overall emissions. For example, the output quantity may represent emissions of one or more particular types of particle, e.g., NOx and/or CO2, or an overall emission value, e.g., a weighted sum of emissions of respective types of particles. The treatment quantity at a particular point in time may represent a velocity and/or acceleration of the vehicle that may be influenced by a driver or, in the case of an autonomic vehicle, by an automated driving subsystem. The sequential treatments may thus represent driving patterns over the duration of the trip, allowing the effect of individual driving decisions on overall emissions to be estimated, for example based on multiple observations of driving along the same route. By estimating causal effects on the emissions, the changing of driving behaviour in such a way that emissions are reduced may be enabled.

Optionally, the causal effect of the treatment quantity at a point in time on the output quantity may be estimated as a regression coefficient of the regression model at that point in time. For example, linear regression models, but also other types of regression models such as polynomial regression, may be parametrized by regression coefficients indicating contributions of respective values to the output quantity. Such a regression coefficient for a treatment quantity at a particular point in time can thus be regarded as a measure of the causal effect of the treatment quantity at that point in time to the output quantity. Because the regression coefficient is based on a temporal latent variable model, confounding factors may be taken into account and therefore regression coefficients can be more accurate than if no temporal latent variable model was used. Linear regression coefficients are especially preferred because of their interpretability.

Optionally, a measurement of the treatment quantity at a point in time may be obtained, and the fitted regression model may be used to determine a contribution of said treatment quantity at said point in time to the output quantity. This determining may be based on the input measurement and the regression coefficient. For example, in the case of linear regression, the product of the regression coefficient and the input measurement, or an increase of the input measurement, may be regarded as the contribution of the treatment quantity to the output quantity, and similarly for binary regression, polynomial regression, etc.

Optionally, an alert may be raised if the determined contribution exceeds a threshold, for example, to a control system controlling a device in the physical system or to a user in a sensory perceptible way. By raising alerts based on a threshold, a particularly strong learning signal may be obtained, e.g., instead of only presenting the determined contribution as a number. The alert can be raised in combination with providing the determined contribution, e.g., the determined contribution can be displayed continuously on a screen, but be emphasized, e.g., by colouring, if the threshold is exceeded. For example, the threshold for raising an alert may be determined based on a desired probability of raising the alert, for example, based on measurements. The threshold can be, for example, a global threshold for all treatment quantities, a threshold for a specific treatment quantity, or even a threshold for a specific treatment quantity at a specific point in time.

Optionally, the physical system may involve a computer-controlled device interacting with an environment. A determined contribution of the treatment quantity at a certain point in time to the output quantity may be used in a loss function for training the controlling of the computer-controlled device. This way, the output quantity can be taken into account for the training of the computer-controlled device, for example, without needing to measure the output quantity itself. Various ways of training a computer-controlled device based on a loss function may be used, for example, techniques from reinforcement learning as known per se in the art. For example, the computer-controlled device may be an autonomous vehicle. Training of the navigation of an autonomous vehicle typically takes into account various aspects, e.g., safety, a desired driving style, fuel efficiency, etcetera. By including contributions to emissions using the techniques described herein, reducing the emissions can be included as an additional aspect in the training of the autonomous vehicle.

Optionally, the treatment quantity can be influenced by a user, for example, operating a machine or other type of device that is a part of the physical system. In such cases, the estimated causal effect may be presented in a sensory perceptible way to the user, for example, on a car dashboard screen or other type of display. This way, the user may receive feedback about the internal state of the physical system and in particular of the device that the user is controlling, allowing the user to make an intervention to produce a desired effect on the output quantity. For example, causal estimates linking driving behaviours to overall emissions may be used to learn drivers to be more efficient, for example, in the form of a virtual assistant of the vehicle giving feedback, e.g.: "Next time you go through this round-about try to accelerate faster, if it is safe to do so".

Optionally, the training observations and the labelled observations additionally comprise measurements of one or more proxy quantities of the physical system at the multiple points in time. The temporal latent variable model may provide observation probabilities of observing the proxy quantities in addition to the treatment quantities. The regression model may estimate the output quantity additionally from the measurements of the one or more proxy quantities at the multiple points in time. By including additional measurements, the temporal latent variable model may be able to capture the state of the physical state more accurately, and by including the proxy quantities also in the regression model, they can allow to perform better deconfounding, resulting in more accurate causal effect estimations. To get the best effects, it is preferable for the proxy quantities to be substantially influenced by the confounder; to not substantially affect the output quantity; and/or to be substantially conditionally independent of the treatment quantities given the latent confounder. Optionally, the one or more proxy quantities comprise an image and/or sensor measurement of the physical system. For example, an image may be indicative of the environment in which a device operates, for example, a traffic situation around a vehicle. Environmental factors are typically factors that are influenced by the confounder but not directly related to the treatment being applied, and can thus be a suitable choice as proxy variables. Various other choices are possible, for example various other measurements such as a temperature measurement or a pressure of a vehicle engine, a status of the windscreen wiper of the vehicle (e.g., on/off), etc. Generally, using more proxy quantities, e.g., from at least two or at least five different sensors, can be used to increase accuracy, although adding proxy quantities that also contribute to the output quantity is preferably avoided.

Optionally, an observation probability of observing a treatment quantity given a latent feature vector is given by a Gaussian distribution. The temporal latent variable model may be trained by training a function to compute parameters of the Gaussian distribution. Instead of a Gaussian distribution, also other continuous distributions with support on all real numbers may be used. Such distributions generally have the advantage that they satisfy positivity, sometimes also called overlap, namely, a probability of observing the treatment quantity given the latent feature value may be positive whenever the probability of observing the treatment quantity itself is positive. Generally, positivity can lead to smaller variance and hence more accurate estimates. Optionally, the temporal latent variable model may be obtained by training the temporal latent variable model based on multiple training observations. Such training observations may comprise at least measurements of the treatment quantity at the multiple points in time, and optionally also measurements of the proxy quantities if they are used. Interestingly, however, measurements of the output quantity may not be needed, which can be especially beneficial in case this quantity is harder to measure. For example, vehicles can typically measure various treatment/proxy quantities as discussed herein such as speed and acceleration, but may not be able to measure emissions.

Optionally, the temporal latent variable model comprises one or more of a Kalman filter, a hidden Markov model, and a deep Markov model. These different examples of temporal latent variable models can be appropriate for different types of physical system to be analysed. For example, multiple temporal latent variable models of different types and/or with different hyperparameters may be trained, and a suitable trained temporal latent variable model may be selected based on performance on a validation dataset.

Optionally, one or more of the quantities of a physical system are measured, e.g., by one or more sensors. For example, temperature may be measured by a temperature sensor, pressure by a pressure sensor, etcetera. Measurement or proxy quantities may comprise, for example, video data, radar data, LiDAR data, ultrasonic data, motion data, thermal imaging camera data, or generally data from any sensor that measures dynamic, in other words time-varying, data. A quantity may represent a state of the physical system at a particular point in time, such as a temperature or a pressure, but it is also possible for a quantity to represent another type of measurement of the physical system, for example, an aggregate amount such as a total or average.

Optionally, one or more treatment quantities may be affected by a control system controlling the physical system or a device therein, for example, an automated driving system of a semi-autonomous of fully autonomous vehicle, a robotics control system, and the like. For example, the control system may employ one or more actuators to affect the treatment quantities. Computer-controlled devices include robotic systems, in which a robot can perform one or more tasks automatically, e.g., under control of an external device or an embedded controller. Further examples that are envisaged include vehicles and components thereof, domestic appliances, power tools, manufacturing machines, personal assistants, access control systems, drones, nanorobots, and heating control systems.

Various appropriate ways of training the temporal latent variable model and/or regression model, in other words, learning their parameters, may be used as known in the art per se. In various embodiments, training is performed using stochastic approaches such as stochastic gradient descent, e.g., using the Adam optimizer of Kingma and Ba, "Adam: A Method for Stochastic Optimization" (available at https://arxiv.org/abs/1412.6980 and incorporated herein by reference). As is known, such optimization methods may be heuristic and/or arrive at a local optimum. Other types of training methods, e.g., least squares estimation, can be used instead or in addition. The temporal latent variable model, e.g., functions for determining the observation probability and/or transition probability, may be parameterized by at least 100, at least 1000, or at least 1 million parameters.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

**BRIEF DESCRIPTION OF THE DRAWINGS**

These and other aspects of the invention will be apparent from and elucidated further with reference to the embodiments described by way of example in the following description and with reference to the accompanying drawings, in which:

Fig. 1 shows a system for estimating causal effects in a physical system,
Fig. 2 shows a system for predicting an output quantity of a physical system;
Fig. 3 shows a vehicle comprising a system for estimating causal effects;
Fig. 4 shows a detailed example a dynamic deconfounder;
Fig. 5 shows a detailed example of dynamic deconfounder;
Fig. 6 shows a detailed example of estimating causal effects in a physical system;
Fig. 7 shows a detailed example of predicting an output quantity of a physical system;
Fig. 8 shows a computer-implemented method of estimating causal effects in a physical system;
Fig. 9 shows a computer-implemented method of predicting an output quantity of a physical system;
Fig. 10 shows a computer-readable medium comprising data.

It should be noted that the figures are purely diagrammatic and not drawn to scale. In the figures, elements which correspond to elements already described may have the same reference numerals.

**DETAILED DESCRIPTION OF EMBODIMENTS**

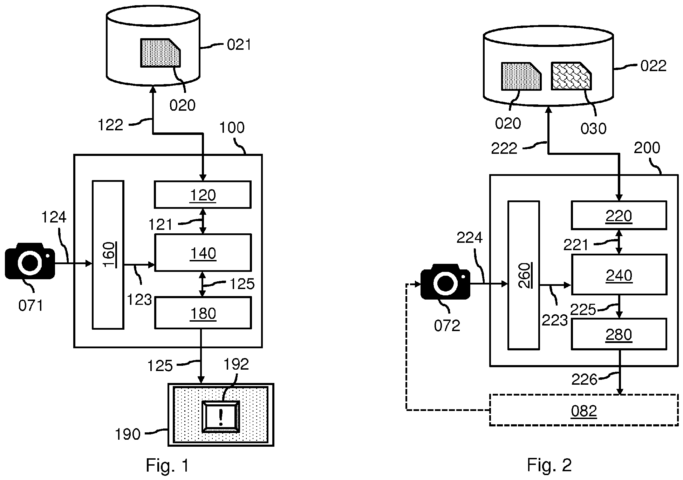

**Fig. 1** shows a system 100 for estimating causal effects in a physical system. A measurable output quantity of the physical system may be affected over multiple points in time by at least one measurable treatment quantity of the physical system. For example, the physical system may comprise a device controlled by system 100, e.g., system 100 may be included in the device. The physical system may also be monitored by system 100. The system 100 may comprise a data interface 120 and a processor subsystem 140 which may internally communicate via data communication 121.

The data interface 120 may be for accessing a temporal latent variable model, represented by data 020. The temporal latent variable model may provide a latent space. A latent feature vector in the latent space may represent a state of the physical system at a point in time. The temporal latent variable model may further provide transition probabilities between latent feature vectors at subsequent points in time, and observation probabilities of observing at least the treatment quantity at a point in time given a latent feature vector.

The processor subsystem 140 may be configured to, during operation of the system 100 and using the data interface 120, access the data 020. For example, as shown in Fig. 1, the data interface 120 may provide access 122 to an external data storage 021 which may comprise said data 020. Alternatively, the data 020 may be accessed from an internal data storage which is part of the system 100. Alternatively, the data 020 may be received via a network from another entity. In general, the data interface 120 may take various forms, such as a network interface to a local or wide area network, e.g., the Internet, a storage interface to an internal or external data storage, etc. The data storage 021 may take any known and suitable form.

Processor subsystem 140 may be configured to, during operation of the system 100 and using the data interface 120, obtain multiple labelled observations. A labelled observation may comprise measurements of the treatment quantity at the multiple points in time and a measurement of the output quantity. Processor subsystem 140 may be further configured to, for each labelled observation, determine latent feature vectors at the multiple points in time according to the temporal latent variable model.

Processor subsystem 140 may be further configured to estimate a causal effect of the treatment quantity on the output quantity by fitting a regression model to the labelled observations. The regression model may estimate the output quantity from at least the measurements of the treatment quantity and the latent feature vectors at the multiple points in time.

As an optional component, the system 100 may comprise an image interface 160 or any other type of sensor interface for obtaining sensor data 124 from one or more sensors, such as a camera 071. For simplicity, a single sensor is shown. Processor subsystem 140 may be configured to obtain the multiple labelled observations at least in part by deriving them from the sensor data 124. For example, the camera may be configured to capture image data 124, processor subsystem 140 being configured to determine a treatment quantity, an output quantity, or a proxy quantity of the multiple labelled observations based on image data 124 obtained, via data communication 123, from sensor interface 160. The sensor interface may be configured for various types of sensor signals, e.g., video signals, radar/LiDAR signals, ultrasonic signals. Sensors as used herein are further discussed with respect to Fig. 2.

As an optional component, the system 100 may comprise a display output interface 180 or any other type of output interface for outputting data to a rendering device, such as a display 180. For example, the data may comprise an estimated causal effect, an alert of a contribution of a treatment quantity exceeding a threshold, and/or a prediction of the output quantity, as described herein. For example, the display output interface 180 may generate display data 182 for the display 190 which causes the display 190 to render the data in a sensory perceptible manner, e.g., as an on-screen visualisation 192.

As an optional component, the system 100 may comprise an actuator interface (not shown) for providing, to an actuator, actuator data causing the actuator to effect an action in the physical system. For example, processor subsystem 140 may be configured to determine the actuator data based at least in part on the estimated causal effects. For example, system 100 may be configured to control a device operating in the physical environment.

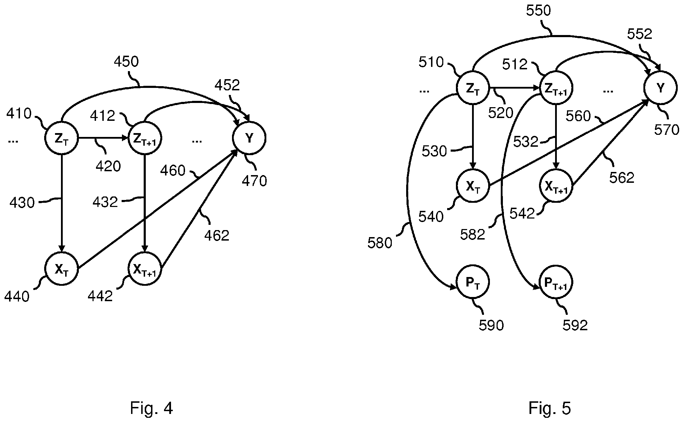

Various details and aspects of the operation of the system 100 will be further elucidated with reference to Figs. 4-7, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central

Processing Unit (CPU), but also by a combination or system of such CPUs and/or other types of processing units. The software may have been downloaded and/or stored in a corresponding memory, e.g., a volatile memory such as RAM or a nonvolatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a system 200 for predicting an output quantity of a physical system. The output quantity of the physical system may a measurable quantity affected over multiple points in time by at least one measurable treatment quantity of the physical system. For example, the physical system may comprise a device controlled by system 200, e.g., system 200 may be included in the device. The physical system may also be monitored by system 200. The system 200 may comprise a data interface 220 and a processor subsystem 240 which may internally communicate via data communication 221.

The data interface 220 may be for accessing a temporal latent variable model, represented by data 020. The temporal latent variable model 020 may provide a latent space. A latent feature vector in the latent space may represent a state of the physical system at a point in time. The temporal latent variable model 020 may further provide transition probabilities between latent feature vectors at subsequent points in time, and observation probabilities of observing at least the treatment quantity at a point in time given a latent feature vector. The data interface 220 may further be for accessing a regression model, represented by data 030. Regression model 030 may be for estimating the output quantity from at least measurements of the treatment quantity and latent feature vectors at the multiple points in time. The temporal latent variable model 020 and/or regression model may be trained by system 200 or obtained from elsewhere, for example, from system 100 of Fig. 1. Systems 100 and 200 may also be combined in a single system.

The processor subsystem 240 may be configured to, during operation of the system 200 and using the data interface 220, access the data 020, 030. For example, as shown in Fig. 2, the data interface 220 may provide access 222 to an external data storage 022 which may comprise said data 020, 030. Alternatively, the data 020, 030 may be accessed from an internal data storage which is part of the system 200. Alternatively, the data 020, 030 may be received via a network from another entity. In general, the data interface 220 may take various forms, such as a network interface to a local or wide area network, e.g., the Internet, a storage interface to an internal or external data storage, etc. The data storage 022 may take any known and suitable form.

Processor subsystem 240 may be configured to, during operation of the system 200 and using the data interface 220, obtain, using a sensor interface 260, an observation comprising measurements of the treatment quantity at the multiple points in time. Processor subsystem 240 may be further configured to determine the latent feature vectors for the input observation at the multiple points in time according to the temporal latent variable model 020. Processor subsystem 240 may be further configured to determine a prediction of the output quantity for the input observation by applying the fitted regression model 030.

The system 200 may comprise an image interface 260 or any other type of sensor interface for obtaining sensor data 224 from one or more sensors, such as a camera 072. The sensor data 224 may be indicative of the treatment quantity of physical system 082 at a point in time. Sensor data may also be indicative of a proxy quantity of the physical system 082. For simplicity, a single sensor is shown. Processor subsystem 240 may be configured to obtain the input observation at least in part by deriving it from the sensor data 224. For example, the camera may be configured to capture image data 224, processor subsystem 240 being configured to determine a treatment quantity or a proxy quantity of the input observation based on image data 224 obtained, via data communication 223, from sensor interface 260. The sensor interface may be configured for various types of sensor signals, e.g., video signals, radar/LiDAR signals, ultrasonic signals.

In some embodiments, the sensor 072 may be arranged in the physical system 082. In other examples, as illustrated in the figure, the sensor may be arranged remotely from the physical system, for example if the quantity(s) can be measured remotely. For example, as shown, camera-based sensor 072 may be arranged outside of environment 082 but may nevertheless measure quantities of the system. Sensor interface 260 may also access the sensor data from elsewhere, e.g., from a data storage or a network location. Sensor interface 260 may have any suitable form, including but not limited to a low-level communication interface, e.g., based on I2C or SPI data communication, but also a data storage interface such as a memory interface or a persistent storage interface, or a personal, local or wide area network interface such as a Bluetooth, Zigbee or Wi-Fi interface or an ethernet or fibreoptic interface. The sensor may be part of system 200.

As an optional component, the system 200 may comprise an actuator interface 280 for providing, to an actuator, actuator data 226 causing the actuator to effect an action in the physical system. For example, processor subsystem 240 may be configured to determine the actuator data 226 based at least in part on the predicted output quantity. Data 226 may be provided to actuator interface 280 via data communication 225. For example, system 200 may be configured to control a device operating in the physical environment 082, e.g., system 200 may be included in the device.

Various details and aspects of the operation of the system 200 will be further elucidated with reference to Figs. 4-7, including optional aspects thereof.

In general, the system 200 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a nonvolatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 200 may also be implemented in a distributed manner, e.g., involving different devices or apparatuses, such as distributed servers, e.g., in the form of cloud computing.

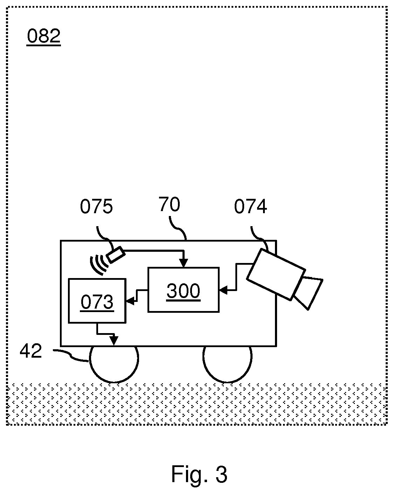

**Fig. 3** shows an example of the above, in that an automotive control system 300 for controlling a vehicle 70 is shown. Automotive control system 200 includes a system for estimating causal effects, e.g., system 100 of Fig. 1, or a system for predicting an output quantity, e.g., system 200 of Fig. 2, as a subsystem. In this example, the physical system comprises vehicle 70 and its environment 082. Vehicle 070 can be an autonomous or semi-autonomous vehicle, but this is not necessary, e.g., vehicle 070 may be driven by a human driver, e.g., a conventional car.

As an example of the use of causal effect estimation in a vehicle 70, the output quantity may be indicative of emissions of the vehicle 070, e.g., of engine 073 driving the wheels 42 of the vehicle. Causal effects may be estimated of various treatment quantities that affect emissions, e.g., driving behaviours such as a velocity and/or an acceleration of the vehicle. For example, such quantities may be measured at multiple points in time in a conventional way. Instead or in addition, various quantities of the engine 073 such as the engine temperature may be measured, for example using a sensor 075. For example, these quantities may be used as proxy quantities as described herein. Instead or in addition, various quantities of the environment 082 of vehicle 70 may be measured, for example, using a camera 074 or other type of sensor.

Based on measured treatment quantities and/or proxy quantities, causal effects of the treatment quantities on the output quantity may be determined. e.g., by system 100, and/or the output quantity may be predicted, e.g., by system 200. For example, an alert may be raised alert if a contribution of a treatment quantity at some point in time exceeds a given threshold. For example, the alert may be shown to a human driver on a screen in the car, e.g., with the advice: "Next time you go through this round-about try to accelerate faster, if it is safe to do so". As another example, a predicted output may be used by automotive control system 200 to control the vehicle, e.g., by adapting the driving style of the vehicle if predicted emissions are close to or exceed legal limits. For example, motor 073 may be controlled to operate to reduce emissions, e.g., by lowering speed or acceleration. Various other ways in which causal effects may be used in vehicles are discussed throughout.

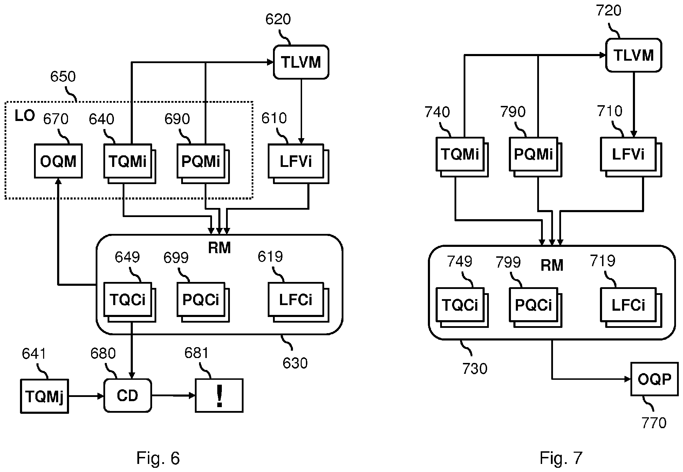

**Fig. 4** shows a detailed yet non-limiting example of a dynamic deconfounder used in various embodiments to estimate a causal effect of a treatment quantity and/or predict an output quantity. For example, the dynamic deconfounder of Fig. 4 may be used in the approaches of Fig. 6 and Fig. 7 discussed elsewhere.

Illustrated in the figure is a labelled observation comprising measurements $x_i$ of one or more treatment quantities at multiple points in time, for example, measurements **XT,** 440, **XT+1,** 442 shown in the figure; and a measurement *y* of an output quantity, shown as measurement **Y,** 470 in the figure. For illustration purposes, the figure shows two time points, but in various embodiments the number of points in time can be more, e.g., at least 10, at least 50, or at least 100, for example. Arrows between quantities in the figure may denote one quantity being statistically dependent on by another quantity. For example, as illustrated by arrows 460, 462, the respective treatment quantities **XT, XT+1** at respective points in time can affect the output quantity **Y.**

As an example, a labelled observation may represent a commute that is partitioned into T segments, e.g., according to a distance covered. Each segment of the commute may be represented by various driving features, e.g., velocity, acceleration, and/or other driving features represented as a *d*-dimensional real-valued vectors **XT, XT+1.** Also, for each commute, overall emissions **Y** may be recorded, e.g., as a real number. A certain behaviour, e.g., accelerating aggressively in a roundabout, may correspond to a certain value of one or more treatment quantities, e.g., $X_r = x$ for a specific time *r* corresponding to the segment of the trip with the roundabout and a specific value *x* corresponding to the behaviour. In this example, estimating the causal effect $X_r = x$ on output *Y* may correspond to estimating the causal effect of the aggressive acceleration. Such a causal effect may be denoted by the do-operator, e.g., $p(Y|do(X_r = x))$. To estimate such a causal effect, in many cases it is not sufficient to empirically estimate the conditional distribution $p(Y|X_r = x)$. In particular, in the presence of unobserved confounders, e.g., the traffic situation, the intervention distribution and the conditional distribution are not the same, e.g., $p(Y|do(X_r = x)) \neq p(Y|X_r = x)$. Interestingly, by estimating an intervention distribution, distribution causal effects may be estimated, e.g., to answer questions like "How would the overall emissions of the trip change, if Jane accelerated faster in the round-about?" Theoretically, in order to perform causal inference from observation data of a physical system, it is preferable for the intervention distribution to be identifiable, meaning that it can be written in terms of quantities that can be observed, e.g., measured. On the other hand, if there are multiple, possibly contradictory, causal conclusions that could be drawn from the data, the intervention distribution is not identifiable. One way to confirm identifiability of a causal effect of *X* on *Y* relates to the so-called back-door criterion of Pearl. If there is a set of observed variables *Z* that blocks all back-door paths from *X* to *Y* and that satisfies positivity, namely, $p(X|Z) > 0$), then *Z* unconfounds the effect of *X* on *Y* and the causal effect can be identified. If all hidden confounders are either blocked or observed, then it is sometimes said that ignorability is satisfied.

In practice, however, when estimating causal effects of sequential treatment quantities **XT, XT+1** on an output quantity **Y** based on observational data, in many cases, no such suitable set observed variables exists. To still be able to estimate causal effects, various embodiments make use of a temporal latent variable model. Such a temporal latent variable model may provide a latent space. Latent feature vectors $z_t$ in the latent space, e.g., latent feature vectors **ZT,** 410, **ZT+1,** 412 shown in the figure, may represent a state of the physical system at a point in time. The latent feature vectors **ZT, ZT+1** may effectively track the latent dynamics of the respective treatment **XT, XT+1** by being based on transition probabilities and observation probabilities. The transition probabilities $p(z_t|z_{t-1})$ may be transition probabilities between latent feature vectors at subsequent points in time, as illustrated by arrow 420 in the figure. The observation probabilities $p(x_t|z_t)$ may be probabilities of observing treatment quantities $x_t$ given latent feature vector $z_t$, as illustrated by arrows 430, 432 in the figure. As shown in the figure, according to the model of Fig. 4, the latent dynamics **ZT, ZT+1** can also affect the output quantity **Y,** as illustrated by arrows 450, 452, and may thereby be confounder.

Accordingly, various embodiments make use of a regression model estimating output quantity **Y** not only from measurements **Xi** of the treatment quantity at the multiple points in time, but also of the latent feature vectors **Zi** which thereby may serve as a deconfounder. For example, to define the regression model, the following factorization of the joint distribution of the output quantity, the latent feature vectors, and the treatment quantities may be used based on the graphical model of Fig. 4:

$$p(y, x_{1:T}, z_{1:T}) = p(y|x_{1:T}, z_{1:T})p(z0)\prod_{t=1}^{T} p(x_t|z_t)p(z_t|z_{t-1}).$$

The transition probabilities $p(z_t|z_{t-1})$ and observation probabilities $p(x_t|z_t)$ of the temporal latent variable model may be modelled in various ways. For example, the temporal latent variable model can be a Kalman filter, a hidden Markov model (HMM), or a deep Markov model.

Interestingly, in the model of Fig. 4, the latent states **ZT, ZT+1** may render the treatment quantities **XT, XT+1** conditionally independent of each other, e.g., following the above formula it may be noted that

$$p(x_{1:T}|z_{1:T}) = \prod_{t=1}^{T} p(x_t|z_t).$$

Interestingly, from this conditional independence between the multiple treatments **Xi,** it may be concluded that in the model of Fig. 4 there are no other multi-cause confounders. For example, if there were two time points *t* and s and if there was an unobserved confounder $u$ influencing both $x_t$ and $x_s$, then conditioning on $z_{1:T}$ may not render them conditionally independent and the above formula for $p(x_{1:T}|z_{1:T})$ may not hold. Accordingly, by estimating **Zi** and correcting for them in a regression model, effects of **Xi** may be accurately estimated.

Effectively, the temporal latent features vectors **ZT, ZT+1** may provide an estimate of the temporal confounders of the physical system, and accordingly, an intervention distribution for estimating a causal effect may be written in terms of observations and latent feature vectors estimated from them, e.g.:

$$p(Y|do(X_r = x)) = \int_z p(Y|X_r = x, Z)p(Z)dZ.$$

This intervention distribution based on latent feature vectors may allow to accurately estimate causal effects of temporal treatments.

Various properties of the physical system under consideration and/or the model used may further help to improve efficiency. Specifically, generally, it is advantageous if positivity is satisfied at least substantially, e.g., $p(x_t|z_t) > 0$ when $p(xt) > 0$. In order to satisfy positivity, a Gaussian treatment emission density $p(x_t|z_t)$, in other words Gaussian observation probabilities, may be used, e.g., $p(x_t|z_t) = N(f_\mu(z_t), f_\Sigma(z_t))$. It is also possible to use other continuous distributions with support on all of $\mathbb{R}$. In various embodiments, the positivity assumption of the temporal latent variable model, may be empirically validated, e.g., by drawing histograms of $p(x_t|z_t)$ for draws from the empirical distribution $x_t \sim p(x_t)$. Positivity, and in particular having relatively large values for $p(x_t|z_t)$, in other words good overlap between the proposal and target distributions, may reduce variance of causal estimates and thus result in improved accuracy.

Generally, it is also advantageous if the Stable Unit Treatment Value Assumption (SUTVA) is satisfied at least substantially. As is known, this assumption states that the potential outcome observation on one unit should be unaffected by the particular assignment of treatments to the other units, in other words, different observations should not interfere with each other. Satisfaction of this assumption generally increases the accuracy of estimated causal effects. For example, when observations represent trips of a vehicle, SUTVA may represent the assumption of no interference between trips. More specifically, according to SUTVA, the outcome of one trip is assumed independent of the treatments, e.g., driving behaviour, of other trips in the set of labelled observations. Accordingly, collecting simultaneously trips of different drivers may be avoided because, e.g., one vehicle breaking abruptly may influence driving behaviour of the vehicle right behind it. As another example, for a dataset recorded from a single driver, SUTVA may require two consecutive trips to have a sufficiently long break between them. Otherwise the engine, the three-way catalytic converter, and other components whose state influences emissions, may still be warm from the previous trip. Accordingly, in some embodiments, the set of labelled observations may be filtered to exclude potentially interfering observations, thereby increasing accuracy. Depending on the amount of interference, however, the advantage of having extra data can also outweigh the disadvantage of potential interference.

Various practical ways in which the dynamic confounder of Fig. 4 can be put into practical use are described further with respect to Fig. 6 and Fig. 7.

**Fig. 5** shows another detailed yet non-limiting example of a dynamic deconfounder for use in estimating causal effects in a physical system and/or predicting an output quantity of the physical system according to various embodiments, e.g., as illustrated in Fig. 6 or Fig. 7.

The dynamic deconfounder of Fig. 5 is based on the dynamic deconfounder of Fig. 4, and many considerations discussed with respect to Fig. 4 also apply here. For example, similarly to Fig. 4, shown is at least one measurable treatment quantity that varies over time **XT,** 540, **XT+1,** 542. The treatment quantity over time may affect an output quantity **Y,** as illustrated by arrows 560, 562, in other words, **XT** and **XT+1** may illustrate a sequential treatment. As in Fig. 4, in order to estimate causal effects of sequential treatments, a temporal latent variable model may be used which provides a latent space. Respective latent feature vectors **ZT,** 510, **ZT+1,** 512 may represent a state of the physical system at respective points in time, corresponding to the treatment quantities. The temporal latent variable model may provide transition probabilities $p(z_t|z_{t-1})$ between latent feature vectors at subsequent points in time, as illustrated by arrow 520 in the figure. The temporal latent variable model may also provide observation probabilities of observing at least the treatment quantities **XT, XT+1** at a point in time given respective latent feature vector **ZT, ZT+1,** as illustrated by arrows 530, 532 in the figure. The latent dynamics **ZT, ZT+1** can also affect the output quantity **Y,** as illustrated by arrows 550, 552, and may thereby be a confounder. Interestingly, in the dynamic deconfounder of Fig. 5, observations may additionally comprise measurements of one or more proxy quantities of the physical system **PT,** 590, **PT+1,** 592, at the multiple points in time. The temporal latent variable model can be configured to take the proxy quantities into account by having the observation probabilities additionally provide probabilities $p(p_t|z_t)$ of the observing the proxy quantities $p_t$ given a latent feature vector $z_t$ at some point in time. Moreover, in regression models for estimating the output quantity **Y,** this quantity may be estimated not only from the treatment quantity **Xi** and the latent feature vectors **Zi,** but also from proxy quantities **Pi.** For example, the following factorization of the joint distribution may be used:

$$p(y, x_{1:T}, p_{1:T}, z_{1:T}) = p(y|x_{1:T}, z_{1:T})p(z_0) \prod_{t=1}^{T} p(x_t|z_t)p(p_t|z_t)p(z_t|z_{t-1}).$$

As illustrated by arrows 580, 582, the proxy quantities are preferably influenced by the confounder **ZT, ZT+1,** but preferably do not substantially influence the output **Y.** Moreover, it is also preferred if the proxy quantities are substantially conditionally independent of the treatment quantities given the latent confounder.

An advantage of the use of proxy quantities is that they may allow a richer latent dynamics to be learned, thereby also improving the accuracy of estimated causal effects. From a more theoretical perspective, it may also be prevented that scale invariances of the latent factor model cause non-identifiability of causal effects if the latent variable model is inconsistently estimated because of positivity. Mathematically, the intervention distribution in the presence of proxy variables, for use for example in a regression model, may represented as follows:

$$p(Y|do(X_r = x), P) = \int_z z(Y|X_r = x, Z)p(Z|P)dZ.$$

As a concrete example, when estimating emissions of a vehicle, various sensor measurement from the engine, e.g., temperature and/or pressure, may be included in proxy quantities **Pi.** Preferably, quantities are chosen that do not substantially contribute to the outcome, in this case the emission. The proxy quantities **Pi** can also comprise an image or one or more features derived therefrom, for example, a camera image representing the traffic situation around a vehicle, etcetera.

**Fig. 6** shows a detailed yet non-limiting example of estimating causal effects in a physical system. A measurable output quantity of the physical system may be affected over multiple points in time by at least one measurable treatment quantity. This example may use a dynamic deconfounder, e.g., as described in Fig. 4 or Fig. 5. Shown in the figure is a set of multiple labelled observations **LO,** 650: for example, at least 100 or at least 1000 labelled observations. Generally, an amount of labelled observations may be collected based on the number of parameters of the regression model to be fitted. A labelled observation of the set **LO** may comprise measurements **TQMi,** 640, of the treatment quantity at the multiple points in time, and a measurement **OQM,** 670, of the output quantity.

As a concrete example, the labelled observations **LO** may represent driving data, e.g., of a commute, partitioned into a number $T$ of segments, for example, at least five, at least ten, or at least 50. A labelled observation may represent a trip and may record, for example, a velocity, an acceleration, and/or other driving features $x_t^i$ for each segment $t$ = 1, ..., T. Accordingly, driving behaviour $\{x_1^i, ..., x_T^i\}$ over the trip may be observed. The measured output quantity **OQM** may represent overall emissions $y_t$. As shown in this figure, optionally, the labelled observations **LO** can additionally comprise measurements **PQMi,** 690, of one or more proxy quantities of the physical system, for example, at least two, at least five, or at least fifty, that preferably to not contribute to the output quantity directly, e.g., a motor temperature or pressure. Interestingly, a temporal latent variable model **TLVM,** 620, may be used to estimate the latent underlying processes explaining the treatment quantities **TQMi,** e.g., driving behaviours, and optionally also the proxy quantities **PQMi,** e.g., the additional engine measurements. The latent underlying processes may be estimated by the temporal latent variable model in the form of latent feature vectors **LFVi,** 610, from a latent space, representing states of the physical system at respective points in time. Specifically, as also discussed with respect to Fig. 4 and Fig. 5, the temporal latent variable model may provide transition probabilities between latent feature vectors at subsequent points in time, and observation probabilities of observing the treatment quantities **TQMi** and optionally also the proxy quantities **PQMi,** given latent feature vector **LFVi** at some point in time. Various known latent variable models can be used, including various state space models such as a Kalman filter; hidden Markov models; and deep Markov models.

The temporal latent variable model **TLVM** may be trained based on a set of multiple training observations comprising measurements of the treatment quantities and, if they are used, also of the proxy quantities, at the multiple points in time. This set of training observations may coincide with labelled observations **LO,** but this is not necessary; in particular, training the temporal latent variable model **TLVM** typically does not require measurements of the output quantity. The temporal latent variable model **TLVM** may be trained to get an estimate of the latent underlying processes that best explain the treatments, and optionally the proxy variables. During the training, transmission and observation may be learned while simultaneously inferring the latent feature vectors, using techniques that are known in the art per se. It is also possible to train multiple temporal latent variable models and select a trained temporal latent variable model based on performance on a validation dataset. For example, different choices for modelling the transition and observation emission probabilities may be possible, e.g., using a linear model, a deep model, or another architecture. The different models may be trained, e.g., using gradient descent. Performance on the validation dataset may be measured in terms of accuracy, e.g., log likelihood. It is possible to share temporal latent variable models between devices, e.g., a device may obtain a pre-trained temporal latent variable model.

In use, the temporal latent variable model **TLVM** may be used to determine the latent feature vectors **LFVi** at the multiple points in time according to the temporal latent variable model **TLVM,** e.g., the latent feature vectors **LFVi** at the multiple points in time may be inferred using inference techniques appropriate for the type of model used. For example, maximum likelihood estimation may be used, or an inference network trained as part of training the temporal latent variable model **TLVM.**

Given the treatment quantity measurements **TQMi,** output quantity measurements **OQM,** and optionally the proxy quantity measurements **PQMi,** a regression model **RM,** 630, may be trained for estimating causal effects of the treatment quantity on the output quantity. The regression model **RM** may estimate the output quantity **OQM** from the measurements of the treatment quantity **TQMi,** the latent feature vectors **LFVi** at the multiple points in time, and optionally the proxy quantity measurements **TQMi** at the multiple points in time. Various types of regression models, in other words outcome models, can be used.

For example, as shown in the figure, a regression model may be used that is parameterized by regression coefficients **TQCi,** 649 for the respective treatment quantities; regression coefficients **PQCi,** 699, for the respective proxy quantities, and or regression coefficients **LFCi,** 619, for the latent features. Linear regression models, binary regression models, and binomial regression models are examples of such regression models. For example, the regression model **RM** may comprise a single coefficient for each treatment quantity, proxy quantity, or latent feature. In such cases, this single coefficient can be interpreted as an estimation of the causal effect of that quantity at that point in time. For example, a regression coefficient may estimate a causal effect of accelerating aggressively at a particular round-about during the observed trips. In other examples, for example in polynomial regression, multiple coefficients may be defined for a quantity at a point in time.

In any case, the regression model **RM** itself may be regarded as an estimator of the causal effect of the treatment quantities on the output quantity at the multiple points in time in the sense of being able to estimate the output quantity and/or to estimate changes to the output quantity resulting from changes to the treatment quantities. Generally, in situations where a treatment quantity can be influenced by a user, the estimated causal effect can be presented in a sensory perceptible way to the user to give the user feedback about the state of the physical system, e.g., so that the user knows how to change behaviour in order to affect the output quantity.

In various embodiments, in a contribution determining operation **CD,** 680, a contribution of a treatment quantity **TQMj,** 641, at a certain point in time to the output quantity may be determined based on an input measurement $x_t$, **TQMj** and the regression coefficient $w_t$ for that quantity and that point in time given by the regression model **RM.** For example, in the case of linear regression, the contribution may be computed as $x_t \cdot w_t$, and similarly for other types of regression model **RM.**

For example, an alert !, 681, may be raised if the determined contribution exceeds a given threshold, for example, raised in a sensory perceptible way to a user, or as a control signal to a controller. For example, in the case of emissions, the regression model **RM** may comprise a regression coefficient $w_t$ for each trip segment t that scales the contribution of a treatment quantity $x_t$ on overall emissions. A driving assistance system can use these coefficients as follows. After a driver passes segment $t,$ the system can evaluate whether $x_t \cdot w_t$ surpasses the threshold. If so, the system can raise an alert. For example, the alert may depend on the sign of the regression coefficient $w_t$. For example, if $x_t$ indicates a velocity, $w_t$ is positive, and $x_t \cdot w_t$ exceeds the threshold, then the driver may be recommended to drive slower, e.g., the recommendation can be: "next time you pass this segment consider driving slower (if it is safe to do so)".

The threshold for raising the alert can be determined or predefined based on a desired probability of raising the alert, for example, based on a set of measurements of the treatment quantity. For example, the threshold can be calibrated such that a predefined percentage of measurements, e.g., 1% results in an alert. The threshold can be a global threshold, e.g., established by determining contributions of a treatment quantity, e.g., $x_t \cdot w_t$, across a set of observations, and choosing the threshold such that a predefined percentage of determined contributions exceeds the threshold. As will be understood, such a global threshold can be considered to imply a time-dependent threshold for respective points in time, e.g., the overall threshold divided by the regression coefficient. The threshold can also be determined as a time-dependent threshold, e.g., based on contributions to the treatment quantity at a particular point in time.

Various embodiments may involve a physical system in which a computer-controlled device interacts with an environment. In such a case, a contribution of a treatment quantity at a particular point in time to the output quantity may be used for training the controlling of the computer-controlled device, for example, as a loss term in a loss function used for such training. For example, the loss function may be used to select the treatment quantity. This way, the computer-controlled device can be encouraged in training to adapt its behaviour in order to decrease or increase, as the case may be, the output quantity. For example, the computer-controlled device may be a fully autonomous or at least highly autonomous vehicle. When the vehicle passes through a segment, for example, a loss term representing a contribution of a treatment quantity in that segment to the overall emissions may be included in the loss function used to select the treatment quantity, e.g., the loss term may be $\min\limits_{x\_t} x_t \cdot w_t$ in the case of linear regression. Of course, other terms of the loss function may balance the minimization/maximization of the output quantity with other objectives such as safety. As a detailed example, training a self-driving vehicle may comprise learning a policy that translates the desired route R and the current environment *E,* e.g., traffic, pedestrians crossing, etc., into actions *A,* e.g., speed up, slow down, steer right, etc. Mathematically, such a policy may be represented as $\pi(\cdot\,;\theta):E \times R \to A,$ parameterized by parameters $\theta$. To train the policy, a loss $L(\theta)$ may be optimized. For example, the loss can reflect similarity of the chosen driving behaviour $a = \pi(e, r; \theta) \in A$ to behaviour of a human driver, safety, etc. The contribution to emissions may be included as follows:

$$L_{\{new\}} = L(\theta) + \ E[contribution\ to\ emissions\ |x = a]$$

$$= L(\theta) + E[contribution\ to\ emissions\ |x = \ \pi(\theta)] = L(\theta) + w * \pi(\theta)$$

where w is the regression coefficient, in this case, of a linear regression model. As the skilled person understands, based on similar loss functions, other computer-controlled devices can be trained as well.

**Fig. 7** shows a detailed example of predicting an output quantity of a physical system. A measurable output quantity of the physical system may be affected over multiple points in time by at least one measurable treatment quantity. Also in this example, a dynamic deconfounder, e.g., as described in Fig. 4 or Fig. 5, may be used.

In this example, a temporal latent variable model **TLVM,** 720 may be obtained. The temporal latent variable model may be pre-trained but can also be trained as discussed, for example, with respect to Fig. 6. The temporal latent variable model may provide a latent space. A latent feature vector in the latent space may represent a state of the physical system at a point in time. The temporal latent variable model may further provide transition probabilities between latent feature vectors at subsequent points in time, and observation probabilities of observing at least the treatment quantity at a point in time given a latent feature vector. In this particular example, the temporal latent variable model **TLVM** also uses one or more proxy quantities, e.g., the observation probabilities are additionally of observing the proxy quantities given the latent feature vector.

Also a regression model **RM,** 730, as described herein may be obtained, for example, as a pre-trained model or by training, e.g., fitting, e.g., as in Fig. 6. As an example, the regression model **RM** shown in the figure comprises regression coefficients **TQCi,** 749, for the treatment quantities; **PQCi,** 799, for the proxy quantities; and **LFCi,** 719, for the latent feature vectors. For example, the regression model can be a linear regression model.

In this example, temporal latent variable model **TLVM** and regression model **RM** may be used to determine a prediction **OQP,** 770, of the output quantity for an input observation comprising at least measurements **TQMi,** 740, of the treatment quantity at the multiple points in time. In this particular example, the input observation additionally comprises measurements **PQMi,** 790, of the proxy quantities at the multiple points in time.

As shown in the figure, using the temporal latent variable model **TLVM,** latent feature vectors **LFVi,** 710, for the input observation **TQMi, PQMi** at the multiple points in time may be determined. This can be performed similarly to the use of the temporal latent variable model discussed for Fig. 6, e.g., using maximum likelihoods or similar.

The latent feature vectors **LFVi** may then be used together with the treatment quantity mesurements **TQMi,** and in this particular example also the proxy quantity measurements **PQMi,** as inputs to the regression model **RM,** leading to the predicted output quantity **OQP.** Interestingly, predicted output quantity **OQP** may be accurate because it can take into account various temporal aspects when deconfounding, e.g., generalizes better to unseen data. For example, accuracy of emissions predictions may be improved.

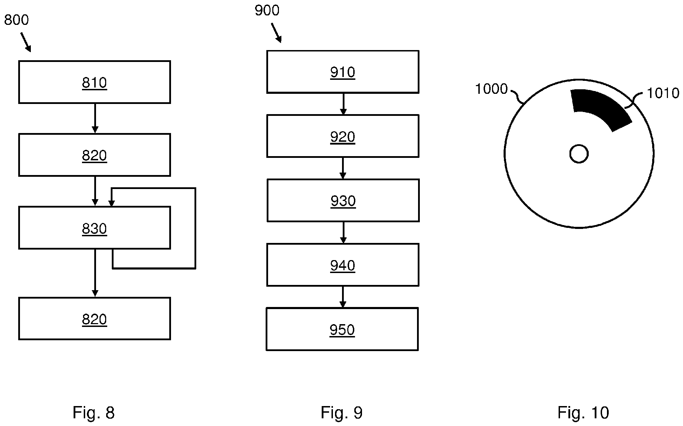

**Fig. 8** shows a block-diagram of computer-implemented method 800 of estimating causal effects in a physical system. A measurable output quantity of the physical system may be affected over multiple points in time by at least one measurable treatment quantity. The method 800 may correspond to an operation of the system 100 of Fig. 1. However, this is not a limitation, in that the method 800 may also be performed using another system, apparatus or device.

The method 800 may comprise, in an operation titled "OBTAINING TEMPORAL LATENT VARIABLE MODEL", obtaining 810 a temporal latent variable model. The temporal latent variable model may provide a latent space. A latent feature vector in the latent space may represent a state of the physical system at a point in time. The temporal latent variable model may further provide transition probabilities between latent feature vectors at subsequent points in time, and observation probabilities of observing at least the treatment quantity at a point in time given a latent feature vector. The method 800 may comprise, in an operation titled "OBTAINING LABELLED OBSERVATIONS", obtaining 820 multiple labelled observations. A labelled observation may comprise measurements of the treatment quantity at the multiple points in time and a measurement of the output quantity.

The method 800 may comprise, for each labelled observation, in an operation titled "DETERMINING LATENT FEATURE VECTORS", determining 830 latent feature vectors at the multiple points in time according to the temporal latent variable model. The method 800 may comprise, in an operation titled "ESTIMATING CAUSAL EFFECT", estimating 840 a causal effect of the treatment quantity on the output quantity by fitting a regression model to the labelled observations. The regression model may estimate the output quantity from at least the measurements of the treatment quantity and the latent feature vectors at the multiple points in time.

**Fig. 9** shows a block-diagram of computer-implemented method 900 of predicting an output quantity of a physical system. The output quantity of the physical system may be a measurable quantity affected over multiple points in time by a measurable treatment quantity. The method 900 may correspond to an operation of the system 200 of Fig. 2. However, this is not a limitation, in that the method 900 may also be performed using another system, apparatus or device.

The method 900 may comprise, in an operation titled "OBTAINING TEMPORAL LATENT VARIABLE MODEL", obtaining 910 a temporal latent variable model. The temporal latent variable model may provide a latent space. A latent feature vector in the latent space may represent a state of the physical system at a point in time. The temporal latent variable model may further provide transition probabilities between latent feature vectors at subsequent points in time, and observation probabilities of observing at least the treatment quantity at a point in time given a latent feature vector. The method 900 may comprise, in an operation titled "OBTAINING REGRESSION MODEL", obtaining 920 a regression model for estimating the output quantity from at least measurements of the treatment quantity and latent feature vectors at the multiple points in time. The method 900 may comprise, in an operation titled "OBTAINING OBSERVATION", obtaining 930 an observation comprising measurements of the treatment quantity at the multiple points in time. The method 900 may comprise, in an operation titled "DETERMINING LATENT FEATURE VECTORS", determining 940 the latent feature vectors for the input observation at the multiple points in time according to the temporal latent variable model. The method 900 may comprise, in an operation titled "DETERMINING PREDICTION", determining 950 a prediction of the output quantity for the input observation by applying the fitted regression model.

Methods 800 and 900 may be combined, e.g., method 800 may be used to fit a regression model for use by method 900. It will be appreciated that, in general, the operations of method 800 of Fig. 8 and method 900 of Fig. 9 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 10,** instructions for the computer, e.g., executable code, may be stored on a computer readable medium 1000, e.g., in the form of a series 1010 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 10 shows an optical disc 1000. Instead or in addition, the computer readable medium 1000 may comprise transitory or non-transitory data 1010 representing a temporal latent variable model, the temporal latent variable model providing a latent space, a latent feature vector in the latent space representing a state of a physical system at a point in time; the temporal latent variable model further providing transition probabilities between latent feature vectors at subsequent points in time, and observation probabilities of observing at least a treatment quantity at a point in time given a latent feature vector; and a regression model for estimating an output quantity from at least measurements of the treatment quantity and latent feature vectors at multiple points in time.

**Claims**

1. A computer-implemented method (800) of determining a fitted regression model for a device, the device interacting with a physical environment, the device and the physical environment forming a physical system, a measurable output quantity of the physical system being affected over multiple points in time by at least one measurable treatment quantity controllable by controlling the device, the fitted regression model allowing to predict the output quantity based on measurements of the treatment quantity, wherein the device is computer-controlled and the device is a robotic, vehicle, power tool, manufacturing machine, personal assistant, access control system, drone or heating control system, the method comprising:

   - obtaining (810) a temporal latent variable model, the temporal latent variable model providing a latent space, a latent feature vector in the latent space representing a state of the physical system at a point in time; the temporal latent variable model further providing transition probabilities between latent feature vectors at subsequent points in time, and observation probabilities of observing at least the treatment quantity at a point in time given a latent feature vector,
   wherein the temporal latent variable model has been be trained based on a set of multiple training observations comprising measurements of the treatment quantities at the multiple points in time, wherein the temporal latent variable model has been trained to get an estimate of the latent underlying processes that explain the treatments quantities, wherein during the training, transmission and observation have been learned while simultaneously inferring the latent feature vectors;
   - obtaining (820) multiple labelled observations, a labelled observation comprising measurements of the treatment quantity at the multiple points in time and a measurement of the output quantity;

- for each labelled observation, determining (830) latent feature vectors at the multiple points in time according to the temporal latent variable model;
- fitting said regression model to the labelled observations, the regression model estimating a causal effect of the treatment quantity on the output quantity by estimating the output quantity from at least the measurements of the treatment quantity and the latent feature vectors at the multiple points in time; and
- determining actuator data for controlling the device based at least in part on the estimated causal effect or the predicted output quantity, the actuator data being configured to cause the actuator to effect an action in the physical system.

2. Method (800) according to claim 1, further comprising estimating the causal effect of the treatment quantity at a particular point in time on the output quantity as a regression coefficient of said regression model at said point in time.

3. Method (800) according to claim 2, further comprising obtaining a measurement of the treatment quantity at the particular point in time, and using the fitted regression model to determine a contribution of said treatment quantity at the particular point in time to the output quantity, the contribution being determined based on the input measurement and the regression coefficient.

4. Method (800) according to claim 3, further comprising raising an alert if said contribution exceeds a given threshold.

5. Method (800) according to claim 3 or 4, the method comprising using the contribution of said treatment quantity at the particular point in time to the output quantity in a loss function for training the controlling of the computer-controlled device.

6. Method (800) according to any one of claims 2-5, comprising determining a threshold for raising an alert if a contribution of the treatment quantity at a point in time exceeds the threshold, the threshold being determined based on a desired probability of raising the alert.

7. Method (800) according to any one of claims 2-6, wherein the treatment quantity can be influenced by a user, the method comprising presenting the estimated causal effect of the treatment quantity at the particular point in time in a sensory perceptible way to the user.

8. Method (800) according to any one of the preceding claims, wherein the device is the vehicle, the output quantity being indicative of emissions of the vehicle, and the treatment quantity being indicative of a driving behaviour, e.g., the treatment quantity representing a velocity and/or an acceleration of the vehicle.

9. Method (800) according to any one of the preceding claims, wherein the training observations and the labelled observations additionally comprise measurements of one or more proxy quantities of the physical system, the regression model estimating the output quantity additionally from the measurements of the one or more proxy quantities at the multiple points in time.

10. Method (800) according to any one of the preceding claims, wherein an observation probability of observing a treatment quantity given a latent feature vector is given by a Gaussian distribution, training the temporal latent variable model comprising training a function to compute parameters of the Gaussian distribution.

11. Method (800) according to any one of the preceding claims, wherein the temporal latent variable model comprises one or more of a Kalman filter, a hidden Markov model, and a deep Markov model.

12. A system (100) comprising a processor configured to perform any one of the methods of claim 1 to 11.

13. A computer-readable medium (1000) comprising transitory or non-transitory data (1010) representing one or more of:

- instructions which, when executed by a processor system, cause the processor system to perform the computer-implemented method according to claim 1;
- a temporal latent variable model, the temporal latent variable model providing a latent space, a latent feature vector in the latent space representing a state of a physical system at a point in time; the physical system comprising a device and an environment with which the device interacts, the temporal latent variable model further providing transition probabilities between latent feature vectors at subsequent points in time, and observation probabilities of observing at least a treatment quantity at a point in time given a latent feature vector, wherein the treatment quantity is controllable by controlling the device; and a regression model for estimating an output quantity from at least measurements of the treatment quantity and latent feature vectors at multiple points in time.

**Patentansprüche**

1. Computer-implementiertes Verfahren (800) zum Bestimmen eines angepassten Regressionsmodells für eine Vorrichtung, wobei die Vorrichtung mit einer physischen Umgebung interagiert, wobei die Vorrichtung und die physische Umgebung ein physisches System bilden, wobei eine messbare Ausgabegröße des physischen Systems über mehrere Zeitpunkte durch mindestens eine messbare Behandlungsgröße beeinflusst wird, die durch Steuern der Vorrichtung steuerbar ist, wobei das angepasste Regressionsmodell es ermöglicht, die Ausgabegröße basierend auf Messungen der Behandlungsgröße vorherzusagen, wobei die Vorrichtung computergesteuert ist und die Vorrichtung ein Roboter, ein Fahrzeug, ein Elektrowerkzeug, eine Herstellungsmaschine, ein persönlicher Assistent, ein Zugangskontrollsystem, eine Drohne oder ein Heizungskontrollsystem ist, wobei das Verfahren Folgendes umfasst:

   - Erhalten (810) eines temporalen latenten Variablenmodells, wobei das temporale latente Variablenmodell einen latenten Raum bereitstellt, wobei ein latenter Merkmalsvektor in dem latenten Raum einen Zustand des physischen Systems zu einem Zeitpunkt repräsentiert; wobei das temporale latente Variablenmodell ferner Übergangswahrscheinlichkeiten zwischen latenten Merkmalsvektoren zu nachfolgenden Zeitpunkten und Beobachtungswahrscheinlichkeiten zum Beobachten mindestens der Behandlungsmenge zu einem Zeitpunkt bei einem latenten Merkmalsvektor bereitstellt,
   wobei das temporale latente Variablenmodell basierend auf einem Satz von mehreren Trainingsbeobachtungen trainiert wurde, die Messungen der Behandlungsmengen zu den mehreren Zeitpunkten umfassen, wobei das temporale latente Variablenmodell trainiert wurde, um eine Schätzung der latenten zugrundeliegenden Prozesse zu erhalten, die die Behandlungsmengen erklären, wobei während des Trainings die Übertragung und Beobachtung gelernt wurden, während gleichzeitig die latenten Merkmalsvektoren abgeleitet wurden;
   - Erhalten (820) mehrerer markierter Beobachtungen, wobei eine markierte Beobachtung Messungen der Behandlungsmenge zu den mehreren Zeitpunkten und eine Messung der Ausgangsmenge umfasst;
   - für jede markierte Beobachtung, Bestimmen (830) latenter Merkmalsvektoren zu den mehreren Zeitpunkten gemäß dem temporalen latenten Variablenmodell;
   - Anpassen des Regressionsmodells an die markierten Beobachtungen, wobei das Regressionsmodell einen kausalen Effekt der Behandlungsmenge auf die Ausgabemenge schätzt, indem die Ausgabemenge aus mindestens den Messungen der Behandlungsmenge und der Vektoren latenter Merkmale zu den mehreren Zeitpunkten geschätzt wird; und
   - Bestimmen von Aktuatordaten zum Steuern der Vorrichtung zumindest teilweise basierend auf dem geschätzten kausalen Effekt oder der vorhergesagten Ausgabegröße, wobei die Aktuatordaten dazu ausgelegt sind, den Aktuator zu veranlassen, eine Aktion in dem physischen System zu bewirken.

2. Verfahren (800) nach Anspruch 1, ferner umfassend das Schätzen des kausalen Effekts der Behandlungsmenge zu einem bestimmten Zeitpunkt auf die Ausgabemenge als einen Regressionskoeffizienten des Regressionsmodells zu dem Zeitpunkt.

3. Verfahren (800) nach Anspruch 2, ferner umfassend das Erhalten einer Messung der Behandlungsmenge zu dem bestimmten Zeitpunkt und Verwenden des angepassten Regressionsmodells, um einen Beitrag der Behandlungsmenge zu dem bestimmten Zeitpunkt zu der Ausgabemenge zu bestimmen, wobei der Beitrag basierend auf der Eingabemessung und dem Regressionskoeffizienten bestimmt wird.

4. Verfahren (800) nach Anspruch 3, ferner umfassend das Auslösen einer Warnung, wenn der Beitrag einen gegebenen Schwellenwert überschreitet.

5. Verfahren (800) nach Anspruch 3 oder 4, wobei das Verfahren das Verwenden des Beitrags der Behandlungsmenge zu dem bestimmten Zeitpunkt zu der Ausgabemenge in einer Verlustfunktion zum Trainieren der Steuerung der computergesteuerten Vorrichtung umfasst.

6. Verfahren (800) nach einem der Ansprüche 2-5, umfassend das Bestimmen einer Schwelle zum Auslösen einer Warnung, wenn ein Beitrag der Behandlungsmenge zu einem Zeitpunkt die Schwelle überschreitet, wobei die Schwelle basierend auf einer gewünschten Wahrscheinlichkeit zum Auslösen der Warnung bestimmt wird.

7. Verfahren (800) nach einem der Ansprüche 2-6, wobei die Behandlungsmenge durch einen Benutzer beeinflusst werden kann, wobei das Verfahren das Präsentieren der geschätzten kausalen Wirkung der Behandlungsmenge zu dem bestimmten Zeitpunkt auf eine sensorisch wahrnehmbare Weise für den Benutzer umfasst.

8. Verfahren (800) nach einem der vorhergehenden Ansprüche, wobei die Vorrichtung das Fahrzeug ist, wobei die Ausgabemenge Emissionen des Fahrzeugs angibt und die Behandlungsmenge ein Fahrverhalten angibt, z. B. wobei die Behandlungsmenge eine Geschwindigkeit und/oder eine Beschleunigung des Fahrzeugs repräsentiert.

9. Verfahren (800) nach einem der vorhergehenden Ansprüche, wobei die Trainingsbeobachtungen und die markierten Beobachtungen zusätzlich Messungen einer oder mehrerer Proxygrößen des physischen Systems umfassen, wobei das Regressionsmodell die Ausgabegröße zusätzlich aus den Messungen der einen oder mehreren Proxygrößen zu den mehreren Zeitpunkten schätzt.

10. Verfahren (800) nach einem der vorhergehenden Ansprüche, wobei eine Beobachtungswahrscheinlichkeit zum Beobachten einer Behandlungsmenge, die einem latenten Merkmalsvektor gegeben ist, durch eine Gaußsche Verteilung gegeben wird, wobei das Trainieren des temporalen latenten Variablenmodells Trainieren einer Funktion zum Berechnen von Parametern der Gaußschen Verteilung umfasst.

11. Verfahren (800) nach einem der vorhergehenden Ansprüche, wobei das temporale latente Variablenmodell ein Kalman-Filter und/oder ein Hidden-Markov-Modell und/oder ein Deep-Markov-Modell umfasst.

12. System (100), das einen Prozessor umfasst, der dazu ausgelegt ist, eines der Verfahren nach Anspruch 1 bis 11 durchzuführen.

13. Computerlesbares Medium (1000), das flüchtige oder nicht-flüchtige Daten (1010) umfasst, die eines oder mehrere von Folgendem repräsentieren:

- Anweisungen, die, wenn sie von einem Computersystem ausgeführt werden, das Computersystem veranlassen, das computer-implementierte Verfahren nach Anspruch 1 durchzuführen;
- ein temporales latentes Variablenmodell, wobei das temporale latente Variablenmodell einen latenten Raum bereitstellt, wobei ein latenter Merkmalsvektor in dem latenten Raum einen Zustand eines physischen Systems zu einem Zeitpunkt repräsentiert; wobei das physische System eine Vorrichtung und eine Umgebung umfasst, mit der die Vorrichtung interagiert, wobei das temporale latente Variablenmodell ferner Übergangswahrscheinlichkeiten zwischen latenten Merkmalsvektoren zu nachfolgenden Zeitpunkten und Beobachtungswahrscheinlichkeiten zum Beobachten mindestens einer Behandlungsmenge zu einem Zeitpunkt bei einem latenten Merkmalsvektor bereitstellt, wobei die Behandlungsmenge durch Steuern der Vorrichtung steuerbar ist; und ein Regressionsmodell zum Schätzen einer Ausgabemenge aus mindestens Messungen der Behandlungsmenge und latenter Merkmalsvektoren zu mehreren Zeitpunkten.

**Revendications**

1. Procédé (800), mis en œuvre par ordinateur, de détermination d'un modèle de régression ajusté d'un dispositif, le dispositif interagissant avec un environnement physique, le dispositif et l'environnement physique formant un système physique, une grandeur de sortie mesurable du système physique étant affectée sur de multiples instants par au moins une grandeur de traitement mesurable contrôlable par commande du dispositif, le modèle de régression ajusté permettant de prédire la grandeur de sortie d'après des mesures de la grandeur de traitement, le dispositif étant commandé par ordinateur et le dispositif étant un robot, un véhicule, un outil motorisé, une machine de fabrication, un assistant personnel, système de contrôle d'accès, un drone ou un système de commande de chauffage, le procédé comprenant :

- l'obtention (810) d'un modèle à variable latente temporelle, le modèle à variable latente temporelle fournissant un espace latent, un vecteur de caractéristiques latentes dans l'espace latent représentant un état du système physique à un instant ; le modèle à variable latente temporelle fournissant en outre des probabilités de transition entre des vecteurs de caractéristiques latentes à des instants ultérieurs, et des probabilités d'observation d'au moins la grandeur de traitement à un instant étant donné un vecteur de caractéristiques latentes, le modèle à variable latente temporelle ayant été entraîné sur la base d'un ensemble de multiples observations d'apprentissage comprenant des mesures des grandeurs de traitement aux multiples instants, le modèle à variable latente temporelle ayant été entraîné pour obtenir une estimation des processus sous-jacents latents qui expliquent les grandeurs de traitement, la transmission et l'observation ayant été apprises pendant l'apprentissage tout en inférant simultanément les vecteurs de caractéristiques latentes ;
- l'obtention (820) de multiples observations étiquetées, une observation étiquetée comprenant des mesures de la grandeur de traitement aux multiples instants et une mesure de la grandeur de sortie ;
- pour chaque observation étiquetée, la détermination (830) de vecteurs de caractéristiques latentes aux multiples instants selon le modèle à variable latente temporelle ;
- l'ajustement dudit modèle de régression aux observations étiquetées, le modèle de régression estimant un effet causal de la grandeur de traitement sur la grandeur de sortie en estimant la grandeur de sortie à partir au moins des mesures de la grandeur de traitement et des vecteurs de caractéristiques latentes aux multiples instants ; et
- la détermination de données d'actionneur pour commander le dispositif sur la base au moins en partie de l'effet causal estimé ou de la grandeur de sortie prédite, les données d'actionneur étant configurées pour amener l'actionneur à effectuer une action dans le système physique.

2. Procédé (800) selon la revendication 1, comprenant en outre l'estimation de l'effet causal de la grandeur de traitement à un instant particulier sur la grandeur de sortie en tant que coefficient de régression dudit modèle de régression audit instant.

3. Procédé (800) selon la revendication 2, comprenant en outre l'obtention d'une mesure de la grandeur de traitement à l'instant particulier, et l'utilisation du modèle de régression ajusté pour déterminer une contribution de ladite grandeur de traitement à l'instant particulier à la grandeur de sortie, la contribution étant déterminée sur la base de la mesure d'entrée et du coefficient de régression.

4. Procédé (800) selon la revendication 3, comprenant en outre le déclenchement d'une alerte si ladite contribution dépasse un seuil donné.

5. Procédé (800) selon la revendication 3 ou 4, le procédé comprenant l'utilisation de la contribution de ladite grandeur de traitement à l'instant donné à la grandeur de sortie dans une fonction de perte pour l'apprentissage de la commande du dispositif commandé par ordinateur.

6. Procédé (800) selon l'une quelconque des revendications 2 à 5, comprenant la détermination d'un seuil pour déclencher une alerte si une contribution de la grandeur de traitement à un instant dépasse le seuil, le seuil étant déterminé sur la base d'une probabilité souhaitée de déclencher l'alerte.

7. Procédé (800) selon l'une quelconque des revendications 2 à 6, la grandeur de traitement pouvant être influencée par un utilisateur, le procédé comprenant la présentation à l'utilisateur de l'effet causal estimé de la grandeur de traitement à l'instant particulier d'une manière perceptible sensorielle.

8. Procédé (800) selon l'une quelconque des revendications précédentes, le dispositif étant le véhicule, la grandeur de sortie étant indicative des émissions du véhicule, et la grandeur de traitement étant indicative d'un comportement de conduite, par exemple, la grandeur de traitement représentant une vitesse et/ou une accélération du véhicule.

9. Procédé (800) selon l'une quelconque des revendications précédentes, les observations d'apprentissage et les observations étiquetées comprenant en outre des mesures d'une ou plusieurs grandeurs substitutives du système physique, le modèle de régression estimant en outre la grandeur de sortie à partir des mesures de la ou des grandeurs substitutives aux multiples instants.

10. Procédé (800) selon l'une quelconque des revendications précédentes, dans lequel une probabilité d'observation d'une grandeur de traitement étant donné par un vecteur de caractéristiques latentes est donnée par une distribution gaussienne, l'entraînement du modèle à variable latente temporelle comprenant l'apprentissage d'une fonction pour calculer des paramètres de la distribution gaussienne.

11. Procédé (800) selon l'une quelconque des revendications précédentes, le modèle à variable latente temporelle comprenant un ou plusieurs éléments parmi un filtre de Kalman, un modèle de Markov caché, et un modèle de Markov profond.

12. Système (100) comprenant un processeur configuré pour réaliser l'un quelconque des procédés selon les revendications 1 à 11.

**13.** Support (1000) lisible par ordinateur comprenant des données transitoires ou non transitoires (1010) représentant un ou plusieurs éléments parmi :

- des instructions qui, lorsqu'elles sont exécutées par un système processeur, amènent le système processeur à réaliser le procédé mis en œuvre par ordinateur selon la revendication 1 ;
- un modèle à variable latente temporelle, le modèle à variable latente temporelle fournissant un espace latent, un vecteur de caractéristiques latentes dans l'espace latent représentant un état d'un système physique à un instant ; le système physique comprenant un dispositif et un environnement avec lequel le dispositif interagit, le modèle à variable latente temporelle fournissant en outre des probabilités de transition entre des vecteurs de caractéristiques latentes à des instants ultérieurs, et des probabilités d'observation d'au moins une grandeur de traitement à un instant étant donné un vecteur de caractéristiques latentes, la grandeur de traitement pouvant être contrôlée par commande du dispositif ; et un modèle de régression servant à estimer une grandeur de sortie à partir d'au moins des mesures de la grandeur de traitement et des vecteurs de caractéristiques latentes à de multiples instants.

Fig. 1

Fig. 2

Fig. 3

Fig. 4

Fig. 5

Fig. 6

Fig. 7

800

810

820

830

820

Fig. 8

900

910

920

930

940

950

Fig. 9

1000

1010

Fig. 10

**EP 3 822 882 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018142378 A1

- EP 2704065 A1

### Non-patent literature cited in the description

- Real Time Trajectory Prediction Using Deep Conditional Generative Models. **SEBASTIAN GOMEZ-GONZALEZ et al.** ARXIV.ORG. CORNELL UNIVERSITY LIBRARY, 09 September 2019

- Variational Autoencoder for End-to-End Control of Autonomous Driving with Novelty Detection and Training Debiasing. **AMINI ALEXANDER et al.** 2018 IEEE/RSJ INTERNATIONAL CONFERENCE ON INTELLIGENT ROBOTS AND SYSTEMS (IROS). IEEE, 01 October 2018, 568-575